# EUROPEAN PATENT APPLICATION

(11) **EP 3 564 301 A1**
(43) Date of publication of application: **06.11.2019**
(21) Application number: 17887347.7
(22) Date of filing: 19.12.2017
(51) Int. Cl.: C08L 15/00, C08K 9/06, C08L 9/02, C09K 3/10, C08F 236/06

(54) **CROSSLINKABLE RUBBER COMPOSITION AND RUBBER CROSSLINKED PRODUCT**

(30) Priority: 28.12.2016 JP 2016255727
(71) Applicant: Zeon Corporation, Tokyo 100-8246 (JP)
(72) Inventor: FUKUMINE, Yoshio, Tokyo 100-8246 (JP); MOSAKI, Shiho, Tokyo 100-8246 (JP)
(74) Representative: Maiwald Patent- und Rechtsanwaltsgesellschaft mbH
(86) International application number: PCT/JP2017/045461
(87) International publication number: WO 2018/123713

(57) **Abstract**

A crosslinkable rubber composition comprises a carboxyl group-containing highly saturated nitrile copolymer rubber, and silica treated with silicone oil.

## Description

### Technical Field

The present invention relates to a crosslinkable rubber composition, and a crosslinked rubber product.

### Background Art

Conventionally, carboxyl group-containing highly saturated nitrile copolymer rubbers, such as hydrogenated acrylonitrile-butadiene copolymer rubbers having carboxyl groups are known. The carboxyl group-containing highly saturated nitrile copolymer rubber has a smaller number of carbon-carbon unsaturated bonds contained in its main chain, compared with a nitrile group-containing copolymer rubber such as an acrylonitrile-butadiene copolymer rubber. Accordingly, a crosslinked rubber product obtained from the carboxyl group-containing highly saturated nitrile copolymer rubber is excellent in heat resistance, oil resistance, ozone resistance and the like, and thus is used for automobile rubber parts.

As an example of a composition comprising the carboxyl group-containing nitrile copolymer rubber, Patent Literature 1 discloses a nitrile rubber composition containing a carboxyl group-containing nitrile rubber, and reactive silicone oil. The carboxyl group-containing nitrile rubber composition disclosed in Patent Literature 1 can provide a crosslinked rubber product which is excellent in processability, normal-state physical properties, and cold resistance, and whose physical properties are less easily changed when used in contact with oil. Accordingly, as described in Patent Literature 1, the composition can be used preferably for automobile parts such as seals, belts, hoses, gaskets, and the like.

### Citation List

### Patent Literature

Patent Literature 1: Japanese Laid-open Patent Publication No. 2012-149222

### Summary of Invention

### Technical Problem

When a crosslinked rubber product is used in an environment in which the product can be soaked with long-life coolant (LLC), or cooling water, for automobile radiators or the like, it is desirable that the product has enhanced resistance to LLC (LLC resistance).

With regard to the enhancement of the LLC resistance, scope for corrective action is associated with the carboxyl group-containing highly saturated nitrile copolymer rubber such as disclosed in Patent Literature 1.

In light of the above, an object of the present invention is to provide a crosslinkable rubber composition that can provide a crosslinked rubber product excellent in LLC resistance as well as in sealing property and oil resistance.

### Solution to Problem

In order to solve the above problem, one aspect of the present invention provides a crosslinkable rubber composition comprising a carboxyl group-containing highly saturated nitrile copolymer rubber, and silica treated with silicone oil.

### Advantageous Effects of Invention

According to an embodiment of the present invention, provided is a crosslinkable rubber composition that can provide a crosslinked rubber product excellent in LLC resistance as well as in sealing property and oil resistance.

### Description of Embodiments

The embodiments of the present invention are described in detail as below.

### <Crosslinkable rubber composition>

A crosslinkable rubber composition in an embodiment of the present invention comprises a carboxyl group-containing highly saturated nitrile copolymer rubber, and silica treated with silicone oil. A crosslinked rubber product obtained from such crosslinkable rubber composition formulated by combining a carboxyl group-containing highly saturated nitrile copolymer rubber, and silica treated with silicone oil, is excellent in sealing property, oil resistance, and LLC resistance.

### <Carboxyl group-containing highly saturated nitrile copolymer rubber>

A carboxyl group-containing highly saturated nitrile copolymer rubber (hereinafter also referred to as carboxyl group-containing highly saturated nitrile copolymerized rubber, or carboxyl group-containing highly saturated nitrile rubber) used in an embodiment of the present invention contains α,β-ethylenically unsaturated nitrile monomer units (a1), α,β-ethylenically unsaturated dicarboxylic monoester monomer units (a2), and conjugated diene monomer units (a3), at least part of the conjugated diene monomer units (a3) being hydrogenated.

The α,β-ethylenically unsaturated nitrile monomer is not particularly limited, and may be any α,β-ethylenically unsaturated compound having a nitrile group. Examples of the α,β-ethylenically unsaturated nitrile monomer include acrylonitrile; α-halogenoacrylonitrile such as α-chloroacrylonitrile, and α-bromoacrylonitrile; α-alkyl acrylonitrile such as methacrylonitrile, ethacrylonitrile; and the like. Among these, acrylonitrile and methacrylonitrile are preferable, and acrylonitrile is more preferable. The α,β-ethylenically unsaturated nitrile monomer may be used singly or in combination of two or more.

A content of the α,β-ethylenically unsaturated nitrile monomer units (a1) in the carboxyl group-containing highly saturated nitrile copolymer rubber is 5 to 60% by weight (wt%), preferably 10 to 55% by weight, more preferably 12 to 50 % by weight, with respect to the total monomer units. When the content of the α,β-ethylenically unsaturated nitrile monomer units is 5 % by weight or more, the oil resistance of the resulting crosslinked rubber product can be enhanced. When the content of the α,β-ethylenically unsaturated nitrile monomer units is 60% by weight or less, the cold resistance of the resulting crosslinked rubber product can be enhanced.

The monomer forming the α,β-ethylenically unsaturated dicarboxylic monoester monomer units (a2), is not particularly limited as long as the monomer is a monoester monomer of an α,β-ethylenically unsaturated dicarboxylic acid having an unesterified and unsubstituted (free) carboxyl group. The unsubstituted carboxyl group is used mainly for crosslinking. Including the α,β-ethylenically unsaturated dicarboxylic monoester monomer units (a2) can provide a crosslinked rubber product excellent in mechanical properties such as elongation property, and compression set resistance.

As an organic group bonded to a carbonyl group through an oxygen atom forming part of an ester bond in the α,β-ethylenically unsaturated dicarboxylic monoester monomer, an alkyl group, a cycloalkyl group, and an alkyl cycloalkyl group are preferable, and an alkyl group is particularly preferable. In a case where the organic group bonded to the carbonyl group is an alkyl group, the number of carbon atoms in the alkyl group is preferably 1 to 12, more preferably 2 to 6. In a case of a cycloalkyl group, number of carbon atoms is preferably 5 to 12, more preferably 6 to 10. Further, in a case of an alkyl cycloalkyl group, number of carbon atoms is preferably of 6 to 12, more preferably 7 to 10. When the number of the carbon atoms in the organic group bonded to the carbonyl group is 12 or less, the crosslinking velocity can be increased, and the mechanical properties of the resulting crosslinked rubber product can be enhanced. On the other hand, a too small number of carbon atoms may possibly decrease a process stability of the crosslinkable rubber composition.

Examples of the α,β-ethylenically unsaturated dicarboxylic monoester monomer forming the α,β-ethylenically unsaturated dicarboxylic monoester monomer units (a2) may include maleic acid monoalkyl esters such as monomethyl maleate, monoethyl maleate, monopropyl maleate, and mono-n-butyl maleate; maleic acid monocycloalkyl esters such as monocyclopentyl maleate, monocyclohexyl maleate, and monocycloheptyl maleate; maleic acid monoalkyl cycloalkyl esters such as monomethyl cyclopentyl maleate, and monoethyl cyclohexyl maleate; fumaric acid monoalkyl esters such as monomethyl fumarate, monoethyl fumarate, monopropyl fumarate, and mono-n-butyl fumarate; fumaric acid monocycloalkyl esters such as monocyclopentyl fumarate, monocyclohexyl fumarate, and monocycloheptyl fumarate; fumaric acid monoalkyl cycloalkyl esters such as monomethyl cyclopentyl fumarate, and monoethyl cyclohexyl fumarate; citraconic acid monoalkyl esters such as monomethyl citraconate, monoethyl citraconate, monopropyl citraconate, and mono-n-butyl citraconate; citraconic acid monocycloalkyl esters such as monocyclopentyl citraconate, monocyclohexyl citraconate, and monocycloheptyl citraconate; citraconic acid monoalkyl cycloalkyl esters such as monomethyl cyclopentyl citraconate, and monoethyl cyclohexyl citraconate; itaconic acid monoalkyl esters such as monomethyl itaconate, monoethyl itaconate, monopropyl itaconate, and mono-n-butyl itaconate; itaconic acid monocycloalkyl esters such as monocyclopentyl itaconate, monocyclohexyl itaconate, and monocycloheptyl itaconate; itaconic acid monoalkyl cycloalkyl esters such as monomethyl cyclopentyl itaconate, and monoethyl cyclohexyl itaconate; and the like.

Among the above-mentioned, a dicarboxylic acid monoester having carboxyl groups for each of two carbon atoms which form a α,β-ethylenically unsaturated bond, such as monopropyl maleate, mono-n-butyl maleate, monopropyl fumarate, mono-n-butyl fumarate, monopropyl citraconate, or mono-n-butyl citraconate, is preferable. Further, a dicarboxylic acid monoester having the above-mentioned two carboxyl groups in the cis position (in the cis configuration) such as mono-n-butyl maleate, or monopropyl citraconate is more preferable, and mono-n-butyl maleate is particularly preferable. The above-mentioned α,β-ethylenically unsaturated dicarboxylic monoester monomer can be used singly or in combination of two or more.

The content of the α,β-ethylenically unsaturated dicarboxylic monoester monomer units (a2) in the carboxyl group-containing highly saturated nitrile copolymer rubber may be 0.5 to 12% by weight, preferably 1 to 10% by weight, more preferably 2 to 8% by weight with respect to the total monomer units. When the content of the α,β-ethylenically unsaturated dicarboxylic monoester monomer units (a2) is 0.5% by weight or more, the resulting crosslinked rubber product can achieve enhanced mechanical properties and compression set resistance. On the other hand, the content being 12% by weight or less can ensure scorch stability of the crosslinkable rubber composition, as well as prevent from reducing fatigue resistance of the resulting crosslinked rubber product.

Examples of the conjugated diene monomer forming the conjugated diene monomer units (a3) include 1,3-butadiene, isoprene, 2,3-dimethyl-1,3-butadiene, 1,3-pentadiene, chloroprene, and the like. Among these, 1,3-butadiene is preferable.

The content of the conjugated diene monomer units (a3) in the carboxyl group-containing highly saturated nitrile copolymer rubber may be 20 to 90 % by weight, preferably 20 to 80% by weight, more preferably 30 to 65% by weight with respect to the total monomer units . When the content of the conjugated diene monomer units (a3) is 20% by weight or more, rubber elasticity of the resulting crosslinked rubber product can be enhanced. When the content of the conjugated diene monomer units (a3) is 90% by weight or less, chemical stability of the resulting crosslinked rubber product can be maintained.

The carboxyl group-containing highly saturated nitrile copolymer rubber used in the embodiment may further include (meth)acrylic acid alkyl ester monomer units (a4), in addition to the α,β-ethylenically unsaturated nitrile monomer units (a1), α,β-ethylenically unsaturated dicarboxylic monoester monomer units (a2), and the conjugated diene monomer units (a3) as mentioned above. In the present specification, "(meth)acrylic acid" means at least one selected from "acrylic acid" and "methacrylic acid".

Examples of the (meth) acrylic acid alkyl ester monomer forming the (meth)acrylic acid alkyl ester monomer units (a4) include a (meth)acrylic acid ester monomer having a linear or cyclic saturated hydrocarbon group having 1 to 8 carbon atoms such as methyl (meth)acrylate, ethyl (meth)acrylate, propyl (meth)acrylate, isopropyl (meth)acrylate, n-butyl (meth)acrylate, isobutyl (meth)acrylate, n-amyl (meth)acrylate, isoamyl (meth)acrylate, n-hexyl (meth)acrylate, 2-ethylhexyl (meth)acrylate, or cyclohexyl (meth)acrylate; a (meth)acrylic acid ester monomer having an alkoxyalkyl group such as methoxymethyl (meth)acrylate, ethoxymethyl (meth)acrylate, 2-ethoxyethyl (meth)acrylate, 2-butoxyethyl (meth)acrylate, 2-methoxyethyl (meth)acrylate, 2-propoxyethyl (meth)acrylate, 3-methoxypropyl (meth)acrylate, or 4-methoxybutyl (meth)acrylate; and the like. Among these, a (meth) acrylic acid ester monomer having an alkoxyalkyl group is preferable. The number of the carbon atoms in the alkoxyalkyl group is preferably 2 to 8, more preferably 2 to 6, further preferably 2 to 4.

The content of the (meth)acrylic acid alkyl ester monomer units (a4) in the carboxyl group-containing highly saturated nitrile copolymer rubber is preferably 12 to 50% by weight, more preferably 15 to 45% by weight, further preferably 18 to 40% by weight with respect to the total monomer units. Including the (meth)acrylic acid alkyl ester monomer units (a4) in the above-mentioned amount can provide a crosslinked rubber product excellent in oil resistance and cold resistance.

Besides the above-mentioned monomer units, the carboxyl group-containing highly saturated nitrile copolymer rubber used in the present embodiment may include other units whose monomer is copolymerizable with the monomer forming the above-mentioned monomer units. Examples of the copolymerizable monomer forming such other monomer units include α,β-ethylenically unsaturated carboxylic acid ester monomers (other than the above-mentioned α,β-ethylenically unsaturated dicarboxylic monoester monomer and (meth)acrylic acid alkyl ester monomer), α,β-ethylenically unsaturated monocarboxylic acid monomers, α,β-ethylenically unsaturated polycarboxylic acid monomers, α,β-ethylenically unsaturated polycarboxylic acid anhydride monomers, aromatic vinyl monomers, fluorine-containing vinyl monomers, copolymerizable nitrogen-containing monomers, and the like.

Examples of the α,β-ethylenically unsaturated carboxylic acid ester monomers include amino group-containing (meth) acrylic acid alkyl ester monomers such as 2-aminoethyl (meth)acrylate, and amino methyl (meth)acrylate; (meth)acrylic acid hydroxy alkyl ester monomers having 1 to 16 carbon atoms in the alkyl group such as 2-hydroxyethyl (meth)acrylate, and 3-hydroxypropyl (meth)acrylate; fluoroalkyl group-containing (meth)acrylic acid alkyl ester monomer such as trifluoroethyl (meth)acrylate, and difluoromethyl (meth)acrylate; maleic acid dialkyl esters such as dimethyl maleate, and di-n-butyl maleate; fumaric acid dialkyl esters such as dimethyl fumarate, and di-n-butyl fumarate; maleic acid dicycloalkyl esters such as dicyclopentyl maleate, and dicyclohexyl maleate; fumaric acid dicycloalkyl esters such as dicyclopentyl fumarate, and cyclohexyl fumarate; itaconic acid dialkyl esters such as dimethyl itaconate, and di-n-butyl itaconate: itaconic acid dicycloalkyl esters such as dicyclohexyl itaconic acid; and the like.

Examples of the α,β-ethylenically unsaturated monocarboxylic acid monomers include acrylic acid, methacrylic acid, ethylacrylic acid, crotonic acid, and cinnamic acid.

Examples of the α,β-ethylenically unsaturated polycarboxylic acid monomers include itaconic acid, fumaric acid, maleic acid, and the like.

Examples of the α,β-ethylenically unsaturated polycarboxylic acid anhydride monomers include maleic anhydride, itaconic anhydride, citraconic anhydride, and the like.

Examples of the aromatic vinyl monomers include styrene, α-methyl styrene, vinyl pyridine, and the like.

Examples of the fluorine-containing vinyl monomers include fluoroethyl vinyl ether, fluoropropyl vinyl ether, o-trifluoromethyl styrene, vinyl pentafluorobenzoate, difluoroethylene, tetrafluoroethylene, and the like.

Examples of copolymerizable nitrogen-containing monomers include N-(4-anilinophenyl)acrylamide, N-(4-anilinophenyl)methacrylamide, N-(4-anilinophenyl)cinnamamide, N-(4-anilinophenyl)crotonamide, N-phenyl-4-(3-vinylbenzyloxy)aniline, N-phenyl-4-(4-vinylbenzyloxy)aniline, and the like. Including the above-mentioned monomer can provide an anti-aging function.

The above-mentioned copolymerizable monomer can be used singly or in combination of two or more. The content of the other monomer units is preferably 50% by weight or less, more preferably 30% by weight or less, further preferably 10% by weight or less with respect to the total monomer units forming the carboxyl group-containing highly saturated nitrile copolymer rubber.

The iodine value of the carboxyl group-containing highly saturated nitrile copolymer rubber used in the present embodiment may be 120 or less, preferably 60 or less, more preferably 40 or less, particularly preferably 20 or less. Further, the iodine value is preferably 2 or more, more preferably 3 or more, further preferably 5 or more. In the present embodiment, the carboxyl group-containing highly saturated nitrile copolymer rubber includes the above-mentioned monomers in the above-mentioned predetermined amount, and has an iodine value in the above-mentioned predetermined range, and is further combined with an after-mentioned polyamine crosslinker. Such a configuration can provide a crosslinked rubber product having an excellent compression set resistance. The iodine value of 120 or less can achieve enhanced heat resistance in the resulting crosslinked rubber product. The iodine value of 2 or more can achieve enhanced cold resistance in the resulting crosslinked rubber product.

A method for obtaining an iodine value of the carboxyl group-containing highly saturated nitrile copolymer rubber used in the present embodiment in the above-mentioned range may comprise, for example, controlling the iodine value in the hydrogenation reaction during fabrication of the carboxyl group-containing highly saturated nitrile copolymer rubber by appropriately adjusting conditions such as kind and amount of hydrogenation catalyst, reaction temperature, hydrogen pressure, reaction period, and the like. An increase in the amount of the hydrogenation catalyst may lower the iodine value. Likewise, a rise in the reaction temperature, the hydrogen pressure, or the reaction period may also lower the iodine value. In the present embodiment, the iodine value can be controlled by appropriately adjusting the above-mentioned conditions.

Further, the carboxyl group-containing highly saturated nitrile copolymer rubber used in the present embodiment may have a polymer Mooney viscosity (ML1+4, 100°C) preferably of 10 to 200, more preferably of 15 to 150, further preferably of 15 to 100, particularly preferably of 20 to 70. The above range of the polymer Mooney viscosity can lead to good processability of crosslinkable rubber composition without deteriorating a mechanical property of the resulting crosslinked rubber product.

A method for fabricating the carboxyl group-containing highly saturated nitrile copolymer rubber used in the present embodiment is not limited, but preferably comprises: copolymerizing the above-mentioned monomers by an emulsion polymerization using an emulsifier to prepare nitrile group-containing copolymer rubber latex; and hydrogenating the latex. For the emulsion polymerization, usually used polymerization subsidiary materials such as emulsifier, polymerization initiator, molecular weight modifier, and the like can be used.

Examples of the emulsifier are not particularly limited, but may include non-ionic emulsifiers such as polyoxyethylene alkyl ethers, polyoxyethylene alkyl phenol ethers, polyoxyethylene alkyl esters, and polyoxyethylene sorbitan alkyl esters; anionic emulsifiers such as salts of fatty acids including myristic acid, palmitic acid, oleic acid, and linolenic acid, and alkylbenzene sulfonates including sodium dodecylbenzene sulfonate, higher alcohol sulfuric acid ester salts, alkyl sulfosuccinic acid salts; copolymerizable emulsifiers such as sulfo esters of α,β-unsaturated carboxylic acids, sulfate esters of α,β-unsaturated carboxylic acids, sulfo alkyl aryl ethers. The amount of the emulsifier used is preferably 0.1 to 10 parts by weight with respect to 100 parts by weight of the total monomers.

Examples of the polymerization initiator are not limited as long as being a radical initiator, but may include inorganic peroxides such as potassium persulfate, sodium persulfate, ammonium persulfate, potassium perphosphate, and hydrogen peroxide; organic peroxides such as t-butyl peroxide, cumene hydroperoxide, p-menthane hydroperoxide, di-t-butyl peroxide, t-butyl cumyl peroxide, acetyl peroxide, isobutyl peroxide, octanoyl peroxide, dibenzoyl peroxide, 3,5,5-trimethyl hexanoyl peroxide, and t-butyl peroxyisobutyrate; azo compounds such as azobis isobutyronitrile, azobis 2,4-dimethyl valeronitrile, azobis cyclohexane carbonitrile, and azobis methyl isobutyrate; and the like. The above-mentioned polymerization initiator may be used singly or in combination of two or more. As the polymerization initiator, an inorganic or organic peroxide is preferable. The peroxide may be used in combination with a reducing agent such as sodium hydrogen sulfite and iron(II) sulfate, to develop a redox polymerization initiator couple. The amount of the polymerization initiator used is preferably 0.01 Lo 2 parts by weight with respect to 100 parts by weight of the total monomers.

Examples of the molecular weight modifier are not limited, but may include mercaptans, such as t-dodecyl mercaptan, n-dodecyl mercaptan, and octyl mercaptan; halogenated hydrocarbons, such as carbon tetrachloride, methylene chloride, and methylene bromide; α-methyl styrene dimers; sulfur-containing compounds such as tetraethylthiuram disulfide, dipenta methylene thiuram disulfide, and diisopropylxanthogen disulfide. These can be used singly or in combination of two or more. Among these, mercaptans are preferable, and t-dodecyl mercaptan is particularly preferable. The amount of the molecular weight modifier used is preferably 0.1 to 0.8 parts by weight with respect to 100 parts by weight of the total monomers.

A medium usually used for the emulsion polymerization may be water. The amount of the water used is preferably 80 to 500 parts by weight with respect to 100 parts by weight of the total monomers.

In the emulsion polymerization, a polymerization subsidiary material such as a stabilizing agent, dispersing agent, pH adjusting agent, deoxygenating agent, and particle size regulator may further be used as necessary. The types and the amounts of such a polymerization subsidiary material to be used are not specifically limited.

Then, the nitrile group-containing copolymer rubber in the nitrile group-containing copolymer rubber latex prepared as above is hydrogenated so that double bonds in the conjugated diene monomer units (a3) are selectively hydrogenated to produce the carboxyl group-containing highly saturated nitrile copolymer rubber.

The hydrogenation may be based on a known method. Examples of such a known method include an oil layer hydrogenation method in which the latex of the copolymer obtained by emulsion polymerization is coagulated, and then hydrogenated in an oil layer; and an aqueous layer hydrogenation method of hydrogenating the latex of the obtained copolymer as it is. Among these, the aqueous layer hydrogenation method may be preferable.

On a hydrogenation by the aqueous layer hydrogenation method, the hydrogenation reaction is performed preferably by adding water to the latex of the copolymer prepared by the emulsion polymerization so as to dilute the latex, as necessary. The aqueous layer hydrogenation method may include an aqueous layer direct hydrogenation method in which the latex is hydrogenated by supplying hydrogen to the reaction system in the presence of a hydrogenation catalyst, and an aqueous layer indirect hydrogenation method in which the latex is hydrogenated by reducing the latex in the presence of an oxidizing agent, a reducing agent, and an activating agent. Of these two methods, the aqueous layer direct hydrogenation method is preferable.

The hydrogenation catalyst in the aqueous layer direct hydrogenation method is not particularly limited as long as the catalyst is a compound not readily decomposed by water. Specific examples of the catalysts include palladium catalysts and the like.

Specific examples of palladium catalysts include palladium salts of carboxylic acids such as formic acid, acetic acid, propionic acid, lauric acid, succinic acid, oleic acid, and phthalic acid; chlorinated products of palladium such as palladium chloride, dichloro(cyclooctadiene)palladium, dichloro(norbornadiene)palladium, and ammonium hexachloropalladate(IV); iodinated product of palladium such as palladium iodide; palladium sulfate dihydrate. Among these, palladium salts of carboxylic acids, dichloro(norbornadiene)palladium, ammonium hexachloropalladate(IV) are particularly preferable.

The amount used of the hydrogenation catalyst can be appropriately determined based on the types of the hydrogenation catalyst used and the aimed iodine value, but the content of the palladium catalyst is preferably 200 to 3000 ppm by weight, more preferably 300 to 2500 ppm by weight, with respect to the nitrile group-containing copolymer rubber before the hydrogenation.

In the aqueous layer direct hydrogenation method, reaction temperature, hydrogen pressure, and reaction time can be appropriately determined based on the aimed iodine value. The reaction temperature is preferably 30 to 70°C, more preferably 40 to 70°C, further preferably 40 to 60°C. The hydrogen pressure is preferably 1 to 5 MPa, more preferably 2 to 4 MPa. The length of the reaction time is preferably 4 to 8 hours, more preferably 5 to 8 hours.

The resulting latex obtained by the above-mentioned hydrogenation reaction can be coagulated by salting-out, filtered out, and dried to obtain a carboxyl group-containing highly saturated nitrile copolymer. Each of the steps of filtering out and drying following the coagulation can be performed based on a known method.

### <Silica treated with silicone oil>

The silica treated with silicone oil (also referred to as silicone oil-treated silica, or silicone oil surface-treated silica), is silica that has a silicone coating formed wholly or partially on the surface of the silica by chemically reacting the surface of the silica with silicone oil. Thus, in the silica treated with silicone oil, a covalent bond, specifically a siloxane bond is formed between a functional group on the surface of the silica and a functional group of the silicone oil.

The treatment method for obtaining a silica treated with silicone oil is not particularly limited as long as the treatment can form a chemical bond between the silicone oil and the surface of the silica, and the silica is wholly or partially coated with silicone oil. For example, the silicone oil-treated silica is obtained by mixing silica raw material (described below) and silicone oil. Further, a method in which silicone oil containing no solvent is sprayed to silica to form a coating, a method in which silicone oil containing a solvent is sprayed to silica and then dried, a method in which silica is coated with an emulsion of silicon oil in an aqueous medium and then dried, or the like may be applied. The treatment method can be appropriately selected based on a desired treatment speed and homogeneity of the treatment. Further, any of the above-mentioned treatment method may include heating treatment as necessary.

The average particle size (median size) (µm) in a volume based distribution of silica treated with silicone oil may be measured based on Coulter Counter Principle, for example, and is preferably 1 to 20 µm, more preferably 1 to 10 µm. When the silica treated with silicone oil has an average particle size of 1 µm or more, coagulation of the silica during blending can be prevented. When the silica treated with silicone oil has an average particle size of 20 µm or less, the silica treated with silicone oil can well be dispersed in the composition, and can provide a reinforcement effect.

BET specific surface area (m²/g) of the silica treated with silicone oil is preferably 10 to 200 m²/g, more preferably 20 to 150 m²/g. Further, the loss on heating (%) in the silica treated with silicone oil by heating at 105°C for 2 hours is preferably 5% or less, more preferably 4% or less. The pH of the silica treated with silicone oil in a 4% dispersion is preferably of 6 to 11, more preferably of 6 to 9.

Specific examples of the silicone oil contained in the silicone oil-treated silica are not particularly limited as long as the silicone oil is an oily substance and can react with silica to form a chemical bond to the surface of the silica, but may include a polysiloxane having at least one repeated unit of -Si(CH₃)₂-O-, -SiHCH₃-O-, -Si(CH₃)(C₆H₅)-O-, wherein C₆H₅ is a phenyl group. Among these, silicone oil having a repeated unit containing -Si(CH₃)₂-O- and/or a repeated unit containing -Si(CH₃)(C₆H₅)-O- is preferable. More preferably, the silicone oil may contain -Si(CH₃)₂-O- and/or -Si(CH₃)(C₆H₅)-O-.

The silicone oil may be linear, or branched as long as having a sufficient flowability. Further, at least one terminal of the silicone oil may have -O-Si(CH₃)₂-CH₃, or -O-Si(CH₃)₂-H. Specific examples of the silicone oil include dimethyl polysiloxane, methyl hydrogen polysiloxane, and methyl phenyl polysiloxane. Among these, dimethyl polysiloxane, and methyl phenyl polysiloxane are preferable, and dimethyl polysiloxane is particularly preferable. The above-mentioned silicone oils may be used singly or in combination of two or more.

Silica raw material for the silica treated with silicone oil is not particularly limited, but may be crystalline silica, non-crystalline silica, natural silica, synthetic silica, or the like. The silica raw material is preferably wet-process synthetic silica, or dry-process synthetic silica, and wet-process synthetic silica is more preferable.

The wet-process synthetic silica is, for example, silica synthesized by neutralization reaction of sodium silicate and mineral acid. Specific examples of the wet-process synthetic silica include precipitation-process synthetic silica (precipitated silica) synthesized in alkali range, gel-process synthetic silica (sol-gel-processed silica) synthesized in acid range, or the like. The dry-process synthetic silica may include, for example, silica synthesized by burning carbon tetrachloride in oxygen-hydrogen flame (fumed silica). Among the above silicas, precipitation-process synthetic silica is preferable.

The amount of silicone oil-treated silica is preferably 10 to 100 parts by weight, more preferably 20 to 90 parts by weight, further preferably 25 to 80 parts by weight, with respect to 100 parts by weight of the carboxyl group-containing highly saturated nitrile copolymer rubber. When the amount of the silicone oil-treated silica is 10 parts by weight or more, the reinforcement effect of the silicone oil-treated silica can be enhanced. When the amount of the silicone oil-treated silica is 100 parts by weight or less, the crosslinkable rubber composition can exhibit appropriate viscosity and flowability, thereby enhancing processability, and a decreased elongation of the resulting crosslinked rubber product can be prevented.

Examples of the silica treated with silicone oil include Nipsil (registered trademark) SS-30P, SS-70, and SS-95 from Tosoh Silica Corporation, AEROSIL (registered trademark) R202 and R208 from Nippon Aerosil Corporation, etc.

### <Crosslinker>

The crosslinkable rubber composition according to the present embodiment may further contain a crosslinker in addition to the above-mentioned carboxyl group-containing highly saturated nitrile copolymer rubber.

The crosslinker used in the embodiment may preferably be a polyamine crosslinker as the polyamine crosslinker can enhance compression set resistance of the resulting crosslinked rubber product. Examples of the polyamine crosslinker are not particularly limited as long as being a compound which have two or more amino groups, or a compound which becomes a form having two or more amino groups at the time of crosslinking. However, the polyamine crosslinker is preferably a compound in which a plurality of hydrogen atoms in an aliphatic hydrocarbon or aromatic hydrocarbon are substituted with amino groups or hydrazide structures (structures represented by -CONHNH₂, wherein CO represents a carbonyl group), and that which becomes the aforementioned compound at the time of crosslinking. Examples of the polyamine crosslinker include aliphatic polyvalent amines such as hexamethylene diamine, hexamethylene diamine carbamate, N,N-dicinnamylidene-1,6-hexanediamine, tetramethylenepentamine, and hexamethylenediamine cinnamaldehyde adduct; aromatic polyvalent amines such as 4,4-methylenedianiline, m-phenylenediamine, 4,4-diaminodiphenyl ether, 3,4-diaminodiphenyl ether, 4,4-(m-phenylenediisopropylidene)dianiline, 4,4-(p-phenylenediisopropylidene)dianiline, 2,2-bis[4-(4-aminophenoxy)phenyl]propane, 4,4-diaminobenzanilide, 4,4-bis(4-aminophenoxy)biphenyl, m-xylylenediamine, p-xylylenediamine, and 1,3,5-benzenetriamine; polyvalent hydrazides such as isophthalic acid dihydrazide, terephthalic acid dihydrazide, phthalic acid dihydrazide, 2,6-naphthalene dicarboxylic acid dihydrazide, naphthalenic acid dihydrazide, oxalic acid dihydrazide, malonic acid dihydrazide, succinic acid dihydrazide, glutamic acid dihydrazide, adipic acid dihydrazide, pimelic acid dihydrazide, suberic acid dihydrazide, azclaic acid dihydrazide, sebacic acid dihydrazide, brassylic acid dihydrazide, dodecanedioic acid dihydrazide, acetone dicarboxylic acid dihydrazide, fumaric acid dihydrazide, maleic acid dihydrazide, itaconic acid dihydrazide, trimellitic acid dihydrazide, 1,3,5-benzene tricarboxylic acid dihydrazide, aconitic acid dihydrazide, and pyromellitic acid dihydrazide; and the like. Among these, hexamethylene diamine carbamate is particularly preferable.

The polyamine crosslinker may be added in a form of a masterbatch, which is a mixture of the polyamine crosslinker with rubber, resin, or the like. Specific examples of the masterbatch may include Rhenogran (registered trademark) HMDC-70 (masterbatch of hexamethylenediamine carbamate, from Rhein Chemie Corporation), VULCOFAC (registered trademark) HDC MB 75 (masterbatch of hexamethylenediamine carbamate, from Safic-Alcan), NORCURE (registered trademark) 1313 to 50 (masterbatch of 2,2-bis[4-(4-aminophenoxy)phenyl] propane, from NORDMANN, RASSMANN GmbH), and the like.

The amount of the crosslinker used in the crosslinkable rubber composition according to the present embodiment is preferably 0.1 to 20 parts by weight, more preferably 0.2 to 15 parts by weight, further preferably 0.5 to 10 parts by weight with respect to 100 parts by weight of carboxyl group-containing highly saturated nitrile copolymer rubber. The above range of the amount of the crosslinker can enhance machine properties and compression set resistance of the resulting crosslinked rubber product. Further, for the crosslinkable rubber composition according to the present embodiment, a crosslinker other than the polyamine crosslinker, for example, sulfur crosslinker, organic peroxide crosslinker may be used to the extent that the effect of the present invention is not impaired.

### <Crosslinking accelerator>

The crosslinkable rubber composition according to the present embodiment may further comprise a crosslinking accelerator in addition to the crosslinker. Some of the crosslinking accelerators can function as a crosslinker. Examples of the crosslinking accelerator blended to the crosslinkable rubber composition include a compound other than that added as the crosslinker. When the polyamine crosslinker is used as a crosslinker, it is preferable to further include a basic crosslinking accelerator.

Specific examples of the basic crosslinking accelerator include basic crosslinking accelerators having a cyclic amidine structure such as 1,8-diazabicyclo[5,4,0]undecene-7 (hereinafter, also abbreviated as "DBU"), 1,5-diazabicyclo[4,3,0]nonene-5,1-methylimidazole, 1-ethylimidazole, 1-phenylimidazole, 1-benzylimidazole, 1,2-dimethyl imidazole, 1-ethyl-2-methylimidazole, 1-methoxyethylimidazole, 1-phenyl-2-methylimidazole, 1-benzyl-2-methylimidazole, 1-methyl-2-phenyl imidazole, 1-methyl-2-benzylimidazole, 1,4-dimethylimidazole, 1,5-dimethylimidazole, 1,2,4-trimethylimidazole, 1,4-dimethyl-2-ethylimidazole, 1-methyl-2-methoxyimidazole, 1-methyl-2-ethoxyimidazole, 1-methyl-4-methoxyimidazole, 1-methyl-2-methoxyimidazole, 1-ethoxymethyl-2-methylimidazole, 1-methyl-4-nitroimidazole, 1,2-dimethyl-5-nitroimidazole, 1,2-dimethyl-5-aminoimidazole, 1-methyl-4-(2-aminoethyl)imidazole, 1-methylbenzimidazole, 1-methyl-2-benzylbenzimidazole, 1-methyl-5-nitrobenzimidazole, 1-methylimidazoline, 1,2-dimethylimidazoline, 1,2,4-trimethylimidazoline, 1,4-dimethyl-2-ethylimidazoline, 1-methyl-phenylimidazoline, 1-methyl-2-benzylimidazoline, 1-methyl-2-ethoxyimidazoline, 1-methyl-2-heptylimidazoline, 1-methyl-2-undecylimidazoline, 1-methyl-2-heptadecylimidazoline, 1-methyl-2-ethoxymethylimidazoline, and 1-ethoxymethyl-2-methylimidazoline; guanidine basic crosslinking accelerators such as tetramethyl guanidine, tetraethylguanidine, diphenylguanidine, 1,3-di-ortho-tolylguanidine, and ortho-tolylbiguanide; aldehyde amine basic crosslinking accelerators such as n-butylaldehyde aniline, and acetaldehyde ammonia; a dicycloalkylamine such as dicyclopentylamine, dicyclohexylamine, and dicycloheptylamine; secondary amine basic crosslinking accelerators such as N-methylcyclopentylamine, N-butylcyclopentylamine, N-heptylcyclopentylamine, N-octylcyclopentylamine, N-ethylcyclohexylamine, N-butylcyclohexylamine, N-heptylcyclohexylamine, N-octylcyclooctylamine, N-hydroxymethylcyclopentylamine, N-hydroxybutylcyclohexylamine, N-methoxyethylcyclopentylamine, N-ethoxybutylcyclohexylamine, N-methoxycarbonylbutylcyclopentylamine, N-methoxycarbonylheptylcyclohexylamine, N-aminopropylcyclopentylamine, N-aminoheptylcyclohexylamine, di(2-chlorocyclopentyl)amine, and di (3-chlorocyclopentyl) amine; and the like. Among these, the guanidine basic crosslinking accelerator, the amine basic crosslinking accelerator, and the basic crosslinking accelerator having the cyclic amidine structure are preferable. 1,8-diazabicyclo[5,4,0]undecene-7 and 1,5-diazabicyclo[4,3,0]nonene-5 are more preferable, and 1,8-diazabicyclo[5,4,0]undecene-7 is particularly preferable.

The above-mentioned basic crosslinking accelerator having the cyclic amidine structure may form a salt with an organic carboxylic acid, an alkyl phosphoric acid, or the like. Further, the above-mentioned secondary amine basic crosslinking accelerator may also be a mixture with an alcohol such as alkylene glycol, alkyl alcohol having 5 to 20 carbon atoms, and may also contain an inorganic acid and/or an organic acid. Such secondary amine basic crosslinking accelerator may form a salt with inorganic acid and/or organic acid further to form a complex with the alkylene glycol.

The amount to be blended of the crosslinking accelerator in the crosslinkable rubber composition according to the present embodiment is preferably 0.1 to 20 parts by weight, more preferably 0.2 to 15 parts by weight, further preferably 0.5 to 10 parts by weight with respect to 100 parts by weight of the carboxyl group-containing highly saturated nitrile copolymer rubber. The above range of the amount of the crosslinking accelerator can enhance compression set resistance of the resulting crosslinked rubber product.

### <Other components>

In addition to the above-mentioned components, the crosslinkable rubber composition according to the present embodiment may contain additives commonly used in the rubber field, for example, a reinforcing filler such as carbon black, or silica (untreated silica, silica treated with a compound other than silicone oil), a non-reinforcing filler such as calcium carbonate, or clay, a crosslinking aid, a crosslinking inhibitor, an anti-aging agent, an antioxidant, a light stabilizing agent, an anti-scorching agent such as primary amine, a silane coupling agent, a plasticizer, a processing aid (slip agent), an adhesive, a lubricant, a flame retardant, a mold retardant, an acid acceptor (including metal acid acceptors), an antistatic agent, a pigment, and the like.

When the silane coupling agent is further added in the rubber composition, a higher dispersibility of the silica can be obtained and a reinforcing function of the silica for rubber composition can also be enhanced.

The amounts of the above-mentioned additives are not particularly limited as long as the purpose or the effect of the present invention is not inhibited, and the amount can be determined in accordance with the purpose of adding the additive. Specifically, when carbon black is added as a reinforcing filler, the type of carbon black (such as HAF, FEF, SRF, MT, etc.) can be selected and the amount to be added can be adjusted in light of elasticity, hardness, chemical resistance of the resulting crosslinked rubber product.

Examples of the plasticizer are not particularly limited, and may include a trimellitic acid plasticizer, a pyromellitic acid plasticizer, an ether ester plasticizer, a polyester plasticizer, a phthalic acid plasticizer, an adipic acid ester plasticizer, a phosphoric acid ester plasticizer, a sebacic acid ester plasticizer, an alkylsulfonic acid ester compound plasticizer, and an epoxidized vegetable oil plasticizer. Specific examples of the plasticizer include tri-2-ethylhexyl trimellitate, trimellitic acid isononyl ester, trimellitic acid mixed linear alkyl ester, dipentaerythritol ester, pyromellitic acid 2-ethylhexyl ester, polyether ester (having a molecular weight of approximately 300 to 5000), bis[2-(2-butoxyethoxy)ethyl] adipate, dioctyl adipate, adipic acid-based polyester (having a molecular weight of 300 to 5000), dioctyl phthalate, diisononyl phthalate, dibutyl phthalate, tricresyl phosphate, dibutyl sebacate, alkylsulfonic acid phenyl ester, epoxidized soybean oil, diheptanoate, di-2-ethylhexanoate, and didecanoate. In the crosslinkable rubber composition, reactive or non-reactive silicone oil that is not chemically bonded to the silica may also exist as a plasticizer.

The above-mentioned plasticizer may be used singly or in combination of two or more. The content of the plasticizer in the crosslinkable rubber composition is preferably 1 to 10 parts by weight with respect to 100 parts by weight of the carboxyl group-containing highly saturated nitrile copolymer rubber.

Examples of the anti-aging agent include, but are not particularly limited to, amine anti-aging agents such as phenyl-1-naphthylamine, alkylated diphenylamine, octylate diphenylamine, 4,4-bis(α,α-dimethylbenzyl)diphenylamine, p-(p-toluenesulfonylamide)diphenylamine, N,N-di-2-naphthyl-p-phenylenediamine, N,N-diphenyl-p-phenylenediamine, N-phenyl-N-isopropyl-p-phenylenediamine, N-phenyl-N-(1,3-dimethylbutyl)-p-phenylenediamine, and N-phenyl-N-(3-methacryloyloxy-2-hydroxypropyl)-p-phen ylenediamine; amine ketone anti-aging agents such as 2,2,4-trimethyl-1,2-dihydroquinoline, and 6-ethoxy-1,2-dihydro-2,2,4-trimethylquinoline; phenol anti-aging agents such as 2,6-di-tert-butyl-4-methylphenol, 2,6-di-tert-butyl-4-ethylphenol, 2,2-methylenebis(4-ethyl-6-tert-butylphenol), 2,2-methylenebis(4-methyl-6-tert-butylphenol), 4,4-butylidenebis(3-methyl-6-tert-butylphenol), 4,4-thiobis(3-methyl-6-tert-butylphenol), 2,5-di-tert-butylhydroquinone, and 2,5-di-tert-amylhydroquinone; a benzimidazole anti-aging agent such as a metal salt of 2-mercaptobenzimidazole, 2-mercaptomethylbenzimidazole, or 2-mercaptomethylbenzimidazole; and the like. The above-mentioned anti-aging agents may be used singly or in combination of two or more. The amount of the anti-aging agent blended in the crosslinkable rubber composition is 0.1 to 10 parts by weight with respect to 100 parts by weight of the carboxyl group-containing highly saturated nitrile copolymer rubber.

Examples of the processing aid (slip agent) may include, but are not particularly limited to, a higher fatty acid such as stearic acid, or lauric acid, and derivatives thereof including ester derivatives and amide derivatives. Further, examples of the processing aid include anionic surfactant components, for example, polyoxyethylene lauryl alcohol, polyoxyethylene higher alcohol ethers such as polyoxyethylene lauryl ether, and polyoxyethylene oleyl ether; polyoxyethylene alkyl aryl ethers such as polyoxyethylene octyl phenyl ether, and polyoxyethylene nonyl phenyl ether; polyoxyethylene acyl esters such as polyoxyethylene glycol monostearate; polypropylene glycol ethylene oxide adducts; polyoxyethylene sorbitan aliphatic esters such as polyoxyethylene sorbitan monolaurate, and polyoxyethylene sorbitan monostearate; phosphoric acid esters such as alkyl phosphoric acid ester, and polyoxyethylene alkyl ether phosphoric acid ester; cellulose ethers; and the like. The above-mentioned processing aid may be used alone or in combination of two or more. The amount used of the processing aid in the crosslinkable rubber composition is preferably 0.1 to 10 parts by weight with respect to 100 parts by weight of the carboxyl group-containing highly saturated nitrile copolymer rubber.

Further, to the extent that the effect of the present invention is not impaired, a polymer other than the above-mentioned carboxyl group-containing highly saturated nitrile copolymer rubber may be blended in the crosslinkable rubber composition according to the present embodiment. Examples of the other polymer include acryl rubber, ethylene-acrylic acid copolymer rubber, fluorine rubber, styrene-butadiene copolymer rubber, ethylene-propylene copolymer rubber, ethylene-propylene-diene ternary copolymer rubber, natural rubber, and polyisoprene rubber. The amount blended of the other polymer in the crosslinkable rubber composition is preferably 30 parts by weight or less, more preferably 20 parts by weight or less, further preferably 10 parts by weight or less with respect to 100 parts by weight of the carboxyl group-containing highly saturated nitrile copolymer rubber.

The crosslinkable rubber composition according to the present embodiment may be prepared by mixing the above-mentioned components preferably in a non-aqueous system. The method of preparing the crosslinkable rubber composition according to the present embodiment is not limited. However, the crosslinkable rubber composition may be usually prepared by primarily kneading the components excluding the crosslinker and a thermally unstable crosslinking aid and the like in a mixer such as Banbury mixer, intermixer, and kneader; transferring the mixed components to a roll or the like; and secondly kneading with the crosslinker and the thermally unstable crosslinking aid.

Mooney viscosity (ML1+4,100°C) of the crosslinkable rubber composition according to the present embodiment is, in light of the processability, preferably 10 to 200, more preferably 15 to 150, further preferably 20 to 120.

### <Crosslinked rubber product>

The crosslinked rubber product in an embodiment of the present invention is obtained by crosslinking the crosslinkable rubber composition according to the above-described present embodiment.

For example, the crosslinked rubber product according to the present embodiment may be manufactured by molding the crosslinkable rubber composition according to the present embodiment to a desired shape with a molding machine having a mold corresponding to the shape, such as an extruder, an injection molding machine, a compressor, a roll, or the like; and heating to cause a crosslinking reaction so that the shape is fixed as a crosslinked product. In this case, the crosslinkable rubber composition may be crosslinked after molding, or may be molded and crosslinked at the same time. The temperature during the molding is usually 10 to 200°C, preferably 25 to 120°C. The temperature during the crosslinking is usually 100 to 200°C, preferably 130 to 190°C, and the duration of the crosslinking is usually 1 minute to 1 hour, preferably 2 minutes to 30 minutes.

Further, depending on the shape, size, etc. of the crosslinked rubber product, the internal part of the product may not be sufficiently crosslinked even if the surface is crosslinked. In such a case, the product may further be heated to be secondarily crosslinked.

As the heating method, a method commonly used for crosslinking rubber may be appropriately selected, the commonly used method including press heating, steam heating, oven heating, or hot-air heating.

The obtained crosslinked rubber product according to the present embodiment described as above is excellent in LLC resistance, particularly at a high temperature, for example, under a severe condition even at a temperature higher than 100°C, or higher than 120°C. In the present specification, LLC resistance can be evaluated based on change of a property such as hardness, stress, and volume, before and after being immersed in a LLC mainly containing alkylene glycol such as ethylene glycol and water at a predetermined temperature for a predetermined time period. Further, the crosslinked rubber product according to the present embodiment has an excellent sealing property, particularly excellent compression set resistance. In addition, the product has excellent oil resistance, particularly exhibiting smaller property change of hardness or elongation before and after being immersed in oil at a predetermined temperature for a predetermined time period. The crosslinked rubber product according to the present embodiment is also excellent in normal-state physical properties including elongation.

Accordingly, the crosslinked rubber product according to the present embodiment can be preferably used for a rubber part that is highly likely to contact with LLC, such as that disposed adjacent to a radiator Lank, a radiator cap, a reservoir tank, a heater core, etc., specifically, a sealing member such as a packing, an O-ring, and a gasket, a belt, or a hose.

### Examples

The embodiments of the present invention will now be more specifically described referring to examples and comparative examples. Unless otherwise mentioned, "part(s)" and "%" are on a by weight basis. Tests and evaluation methods for physical properties and characteristics are as follows.

### [Tests and evaluation methods for physical properties and characteristics]

### <Composition of carboxyl group-containing highly saturated nitrile copolymer rubber>

The content of each monomer unit forming a carboxyl group-containing highly saturated nitrile copolymer rubber was measured by the following method. That is, the content of mono-n-butyl maleate unit was calculated as follows: 100 ml of 2-butanone was added to 0.2 g of a 2 mm square piece of carboxyl group-containing highly saturated nitrile copolymer rubber, and stirred for 4 hours. After 20 ml of ethanol and 10 ml of water were added, a titration was performed while stirring with 0.02 N water-containing ethanol solution of potassium hydroxide at room temperature using thymolphthalein as indicator to measure the molar number (number of moles) of the carboxyl group with respect to 100 g of the carboxyl group-containing highly saturated nitrile copolymer rubber. The measured molar number was converted into the amount of mono-n-butyl maleate units.

The content of 1,3-butadiene units and the content of hydrogenated butadiene units are calculated by measuring the iodine value (based on JIS K 6235) using the nitrile group-containing copolymer rubber before hydrogenation. The content of acrylonitrile units is calculated by measuring the nitrogen content in the carboxyl group-containing highly saturated nitrile copolymer rubber by Kjeldahl method based on JIS K 6383. The content of acrylic acid 2-methoxyethyl units and n-butyl acrylate units was calculated as the remainder of the above monomer units.

### <Iodine value>

The iodine values of the carboxyl group-containing highly saturated nitrile copolymer rubber and highly saturated nitrile copolymer rubber (hereinafter collectively referred to as polymer) were measured based on JIS K 6235.

### <Polymer Mooney viscosity>

Mooney viscosity (polymer Mooney viscosity) (ML1+4, 100°C) of the carboxyl group-containing highly saturated nitrile copolymer rubber and other highly saturated nitrile copolymer rubber was measured based on JIS K 6300. The Mooney viscosity is an indicator for evaluating processability and the like of a carboxyl group-containing highly saturated nitrile copolymer rubber, a copolymer rubber comprising highly saturated nitrile copolymer rubber, and a crosslinkable rubber composition. When the value of the Mooney viscosity is smaller, the processability of the composition or the rubber can be better.

### <Normal-state physical property (Elongation) >

The nitrile rubber compositions (crosslinkable rubber compositions) obtained in Examples and Comparative examples were placed in a mold having a length of 15 cm, a width of 15 cm, and a depth of 0.2 cm, and press-molded by pressing at a pressure of 10 MPa at 170°C for 20 minutes to obtain a crosslinked product in a sheet form. Subsequently, the resulting crosslinked product was transferred to a Geer type oven and subjected to secondary crosslinking at 170°C for 4 hours, and the crosslinked rubber product in a sheet form was cut out in a No.3 dumbbell shape to prepare a test piece. Then, the obtained test piece was used for measurement of the elongation (elongation rate) (%) based on JIS K6251.

### <Sealing property (Compression set)>

Using a mold having a diameter of 29 mm and a depth of 12.5 mm, the crosslinkable rubber composition is crosslinked at 170°C for 20 minutes at a pressure of 10 MPa, and then secondarily crosslinked at 170°C for 4 hours to obtain a test piece of the crosslinked rubber product. By using the test piece, the compression set (%) was measured based on JIS K6262, under the condition wherein the test piece was sandwiched between two planer surfaces in compression so that the distance between the surfaces was decreased by 25% in the thickness direction maintaining at 150°C for 168 hours. The smaller the value of the compression set is, the better the compression set resistance and the sealing property.

### <Oil resistance (Change of hardness, and change rate of elongation)>

In the same manner as in the above-mentioned evaluation of the normal-state physical property, the obtained crosslinked rubber product in a sheet form was cut out in a No. 3 dumbbell shape to prepare a test piece. Then, an oil immersion resistance test was performed based on JIS K6258, by immersing the obtained test piece in test oil (OS206304AC) prepared to have a temperature of 150°C, for 168 hours.

In the oil immersion resistance test, the hardnesses of the crosslinked rubber product before and after the immersion were measured based on JIS K6253 using a Durometer hardness test machine (type A), and also the elongations of the crosslinked rubber product before and after the immersion were measured based on JIS K6251. Based on the measurements, the change of hardness before and after the oil immersion (pts) and the change rate of elongation before and after the oil immersion (%) were evaluated.

### <LLC resistance (Change of hardness, change rate of stress, and change rate of volume)>

In the same manner as in the above-mentioned evaluation of the normal-state physical property, the obtained crosslinked rubber product in a sheet form was cut out in a No. 3 dumbbell shape to prepare a test piece. Then, the LLC immersion test was performed by placing the test piece and a test liquid, which is a mixture containing ethylene glycol and distillated water in a volume ratio in 1:1, in a hermetically sealed container, followed by maintaining in an oven at 125°C for 168 hours.

In the LLC immersion test, hardnesses of the crosslinked rubber product before and after the immersion were measured based on JIS K6253 using a Durometer hardness test machine (type A), and the 100% stresses (100% tensile stresses) and volumes of the crosslinked rubber product before and after the immersion were also measured based on JIS K6251. Then, the change of hardness before and after oil immersion (pts), change rate of stress (%) at 100% elongation, and change rate of volume were evaluated.

### [Production Examples, Examples, and Comparative examples]

### (Production Example 1) Production of a carboxyl group-containing highly saturated nitrile copolymer rubber (A-1)

180 parts of ion exchanged water, 25 parts of aqueous solution of sodium dodecylbenzene sulfonate having a concentration of 10% by weight, 37 parts of acrylonitrile, 6 parts of mono-n-butyl maleate, and 0.75 parts of t-dodecyl mercaptan (molecular weight modifier) were loaded in this order in a metal bottle. After exchanging the interior gas with nitrogen for three times, 57 parts of 1,3-butadiene was further loaded. Maintaining the metal bottle at 5°C, 0.1 parts of cumene hydroperoxide (polymerization initiator) was further added, and to perform a polymerization reaction for 16 hours while rotating the metal bottle. Subsequently, after 0.1 parts of aqueous solution of hydroquinone (polymerization terminator) having a concentration of 10% by weight was added to terminate the polymerization reaction, residual monomers were removed using a rotary evaporator at a water temperature of 60°C to obtain a latex of acrylonitrile-butadiene-mono-n-butyl maleate copolymer rubber (solid content concentration: approximately 30% by weight).

Next, the obtained latex was placed in an autoclave, palladium catalyst (solution of an acetone solution of 1% by weight of palladium acetate, and ion exchanged water mixed in equal weights) was added such that the content of palladium was to be 2000 ppm with respect to weight of rubber contained in the latex, and hydrogenation reaction was performed at a hydrogen pressure of 3 MPa at a temperature of 50°C for 6 hours, to obtain a latex of the carboxyl group-containing highly saturated nitrile copolymer rubber (A-1).

Then, to the resulting latex of the carboxyl group-containing highly saturated nitrile copolymer rubber (A-1), methanol in a volume twice as much as the rubber was added to coagulate the latex. The coagulated latex was vacuum-dried at 60°C for 12 hours to obtain the carboxyl group-containing highly saturated nitrile copolymer rubber (A-1). The carboxyl group-containing highly saturated nitrile copolymer rubber (A-1) had an iodine value of 10, a carboxyl group content was 3.2 × 10⁻² ephr, and a polymer Mooney viscosity (ML1+4, 100°C) was 45.

The composition of the carboxyl group-containing nitrile copolymer rubber (A-1) was obtained by determining the content of acrylonitrile units by the Kjeldahl method, and the content of mono-n-butyl maleate units based on the amount of the carboxyl group, and calculating the content of the remainder as the content of the 1,3-butadiene units. The obtained composition of the carboxyl group-containing nitrile copolymer rubber (A-1) included 35.6% by weight of acrylonitrile units, 58.8% by weight of butadiene units (including hydrogenated units), and 5.6% by weight of mono-n-butyl maleate units.

### (Production Example 2) Production of carboxyl group-containing highly saturated nitrile copolymer rubber (A-2)

A carboxyl group-containing highly saturated nitrile copolymer rubber (A-2) was obtained in the same manner as in Production Example 1 except for altering the amount of the acrylonitrile to 45 parts, the amount of the mono-n-butyl maleate to 6 parts, and the amount of 1,3-butadiene to 49 parts. The obtained carboxyl group-containing highly saturated nitrile copolymer rubber (A-2) had a composition of 45.4% by weight of acrylonitrile units, 49.7% by weight of butadiene units (including hydrogenated units), and 4.9% by weight of mono-n-butyl maleate units. The obtained carboxyl group-containing highly saturated nitrile copolymer rubber (A-2) had an iodine value of 9, a carboxyl group content of 3.0 × 10⁻² ephr, and a polymer Mooney viscosity (ML1+4, 100°C) of 40.

### (Production Example 3) Production carboxyl group-containing highly saturated nitrile copolymer rubber (A-3)

The carboxyl group-containing highly saturated nitrile copolymer rubber (A-3) was obtained in the same manner as in Production Example 1 except for altering the amount of acrylonitrile to 23 parts, the amount of mono-n-butyl maleate to 6.5 parts, and the amount of 1,3-butadiene to 40 parts, respectively, and adding 30.5 parts of 2-methoxyethyl acrylate with the mono-n-butyl maleate. The obtained composition of the carboxyl group-containing highly saturated nitrile copolymer rubber (A-3) included 24.0% by weight of acrylonitrile units, 46.6% by weight of butadiene units (including hydrogenated units), 6.5% by weight of mono-n-butyl maleate units, and 22.9% by weight of 2-methoxyethyl acrylate. The obtained carboxyl group-containing highly saturated nitrile copolymer rubber (A-3) had an iodine value of 10, a carboxyl group content of 3.7 × 10⁻² ephr, and a polymer Mooney viscosity (ML1+4, 100°C) of 48.

### (Production Example 4) Production of carboxyl group-containing highly saturated nitrile copolymer rubber (A-4)

The carboxyl group-containing highly saturated nitrile copolymer rubber (A-4) was obtained in the same manner as in Production Example 1 except for altering the amount of acrylonitrile to 21 parts, the amount of mono-n-butyl maleate to 5 parts, the amount of 1,3-butadiene to 44 parts, respectively, and adding 30 parts of n-butyl acrylate with the mono-n-butyl maleate. The obtained composition of the carboxyl group-containing highly saturated nitrile copolymer rubber (A-4) included 20.8% by weight of acrylonitrile units, 44.2% by weight of butadiene units (including hydrogenated units), 4.9% by weight of mono-n-butyl maleate units, and 30.1% by weight of n-butyl acrylate units. The obtained carboxyl group-containing highly saturated nitrile copolymer rubber (A-4) had an iodine value of 10, a carboxyl group content of 2.8 × 10⁻² ephr, and a polymer Mooney viscosity (ML1+4, 100°C) of 48.

### (Production Example 5) Production of carboxyl group-containing highly saturated nitrile copolymer rubber (A-5)

The carboxyl group-containing highly saturated nitrile copolymer rubber (A-5) was obtained in the same manner as in Production Example 1 except for altering the amount of acrylonitrile to 15 parts, the amount of mono-n-butyl maleate to 5 parts, the amount of 1,3-butadiene to 43 parts, and adding 37 parts of n-butyl acrylate with the mono-n-butyl maleate. The obtained composition of the carboxyl group-containing highly saturated nitrile copolymer rubber (A-5) included 15.4% by weight of acrylonitrile units, 43.5% by weight of butadiene units (including hydrogenated units), 5% by weight of mono-n-butyl maleate units, and 36.1% by weight of n-butyl acrylate units. The obtained carboxyl group-containing highly saturated nitrile copolymer rubber (A-5) had an iodine value of 10, a carboxyl group content of 2.9 × 10⁻² ephr, and a polymer Mooney viscosity (ML1+4, 100°C) of 40.

### (Production Example 6) Production of highly saturated nitrile copolymer rubber (A-6)

In a reactor, 200 parts of ion exchanged water, and 2.25 parts of fatty acid potassium soap (potassium salt of fatty acid) were added to prepare a soap aqueous solution. Then, in the soap aqueous solution, 37 parts of acrylonitrile, and 0.5 parts of t-dodecyl mercaptan (molecular weight modifier) were loaded in this order. After the interior gas was replaced with nitrogen three times, 63 parts of 1,3-butadiene was further added. Subsequently, maintaining the reactor at 5°C, 0.1 parts of cumene hydroperoxide (polymerization initiator) was added to perform a polymerization reaction for 16 hours while stirring. Next, 0.1 parts of an aqueous solution of hydroquinone (polymerization terminator) having a concentration 10% by weight was added to terminate the polymerization reaction. The residual monomers were removed using a rotary evaporator at a water temperature of 60°C to obtain a latex (solid content concentration: approximately 25% by weight) of an acrylonitrile-butadiene copolymer rubber (nitrile copolymer rubber).

The obtained latex was added to an aqueous solution of aluminum sulfate in an amount of 3% by weight with respect to the nitrile copolymer rubber portion, and stirred to coagulate the latex. After filtering and washing with water, the coagulated latex was vacuum-dried at 60°C for 12 hours to obtain a nitrile copolymer rubber.

Then, the obtained nitrile rubber was dissolved in acetone to be a solution having a concentration of 12%. The solution was placed in an autoclave, a palladium-silica catalyst was added to the solution in an amount of 500 ppm by weight with respect to the nitrile rubber, and the hydrogenation reaction was performed at a hydrogen pressure of 3 MPa and at a temperature of 50°C. After the completion of the hydrogenation reaction, the reactant was poured into a large amount of water to coagulate the reactant, followed by filtering and drying to obtain a highly saturated nitrile copolymer rubber (A-6). The obtained composition of the highly saturated nitrile copolymer rubber (A-6) included 36.2% by weight of acrylonitrile units, and 63.8% by weight of 1,3-butadiene units (including hydrogenated units), and had an iodine value of 8, and a polymer Mooney viscosity (ML1+4, 100°C) of 85.

### (Example 1)

Using a Banbury mixer, 50 parts of silicone oil surface-treated silica (trade name "Nipsil SS-70" from Tosoh-Silica Corporation, average particle size: 5 µm, BET specific surface area: 49 m²/g), 5 parts of tri-2-ethylhexyl trimellitate (trade name "ADK Cizer (registered trademark) C-8" from ADEKA Corporation, plasticizer), 1.5 parts of 4,4'-di-(α,α'-dimethylbenzyl)diphenylamine (trade name "Nocrac CD" from Ouchi Shinko Chemical Industrial Co., Ltd., anti-aging agent), 1 part of stearic acid (processing aid), 1 part of polyoxyethylene alkyl ether phosphoric acid ester (trade name "Phosphanol RL210" from Kao Corporation, processing aid), 2.4 parts of hexamethylenediamine carbamate (trade name "Diak#1" from Dupont Dow Elastomers LLC, polyamine crosslinker belonging to aliphatic polyvalent amine), 4 parts of 1,8-diazabicyclo[5,4,0]undecene-7(DBU) (trade name "RHENOGRAN (registered trademark) XLA-60" from Rhein Chemie Corporation, consisting of 60% of DBU (including a fraction forming zinc dialkyldiphosphate salt) and 40% of acrylic acid polymer and dispersing agent, a basic crosslinking accelerator) were added to 100 parts of the carboxyl group-containing highly saturated nitrile copolymer rubber (A-1) obtained in Production Example 1, followed by kneading the mixture, to prepare a nitrile rubber composition (crosslinkable rubber composition).

### (Example 2)

Using the carboxyl group-containing highly saturated nitrile copolymer rubber (A-2) obtained in Production Example 2, a crosslinkable rubber composition was prepared in the same manner as in Example 1 except for altering the amount of the hexamethylenediamine carbamate to 2 parts, and evaluated.

### (Example 3)

Using the carboxyl group-containing highly saturated nitrile copolymer rubber (A-3) obtained in Production Example 3, a crosslinkable rubber composition was prepared in the same manner as in Example 1 except for altering the amount of the hexamethylenediamine carbamate to 2.7 parts, and evaluated.

### (Example 4)

Using the carboxyl group-containing highly saturated nitrile copolymer rubber (A-4) obtained in Production Example 4, a crosslinkable rubber composition was prepared in the same manner as in Example 1 except for altering the amount of the hexamethylenediamine carbamate to 1.9 parts, and evaluated.

### (Example 5)

Using the carboxyl group-containing highly saturated nitrile rubber (A-5) obtained in Production Example 5, a crosslinkable rubber composition was prepared in the same manner as in Example 1 except for altering the amount of the hexamethylenediamine carbamate to 2.1 parts, and evaluated.

### (Example 6)

A crosslinkable rubber composition was prepared in the same manner as in Example 1 except for replacing 2.4 parts of hexamethylenediamine carbamate, the crosslinker, with 5.1 parts of N,N-dicinnamylidene-1,6-hexanediamine (trade name "Diak#3" from Dupont Dow Elastomers LLC, polyamine crosslinker belonging to aliphatic polyvalent amine), and evaluated.

### (Comparative Example 1)

A crosslinkable rubber composition was prepared in the same manner as in Example 1 except for altering the silicone oil surface-treated silica to untreated silica (trade name "Nipsil ER" from Tosoh-Silica Corporation, average particle size: 15 µm, BET specific surface area 120 m²/g), and evaluated.

### (Comparative Example 2)

A crosslinkable rubber composition was prepared in the same manner as in Comparative Example 1 except for further adding 2 parts of silane coupling agent 1 (trade name "KBM3103C" from Shin-Etsu Chemical Co. , Ltd), and evaluated.

### (Comparative Example 3)

A crosslinkable rubber composition was prepared in the same manner as in Comparative Example 1 except for further adding 0.5 parts of silane coupling agent 2 (trade name "Z-6011" from Dow Corning Toray Co., Ltd.), and evaluated.

### (Comparative Example 4)

A crosslinkable rubber composition was prepared in the same manner as in Comparative Example 1 except for further adding 4 parts of silane coupling agent 3 (trade name "HT750" from S&S Japan Co., LTD), and replacing 2.4 parts of hexamethylene diamine carbamate, the crosslinker, with 6.3 parts of 2,2-bis[4-(4-aminophenoxy)phenyl]propane, and evaluated.

### (Comparative Example 5)

A crosslinkable rubber composition was prepared in the same manner as in Comparative Example 1 except for replacing the silica with dimethyl silylated silica (trade name "Aerosil R972" from Evonik Degussa Corporation, BET specific surface area: 110 m²/g), and evaluated.

### (Comparative Example 6)

A crosslinkable rubber composition was prepared in the same manner as in Example 1 except for using the highly saturated nitrile rubber (A-6) instead of the carboxyl group-containing highly saturated nitrile copolymer rubber (A-1), and adding 8 parts of 1,3-bis(t-butylperoxyisopropyl)benzene (40% product), without adding the polyoxyethylene alkyl ether phosphoric acid ester, hexamethylenediamine carbamate, and 1,8-diazabicyclo[5,4,0]undecene-7(DBU), and evaluated.

The results of Examples and Comparative Examples are shown in Tables 1 and 2.

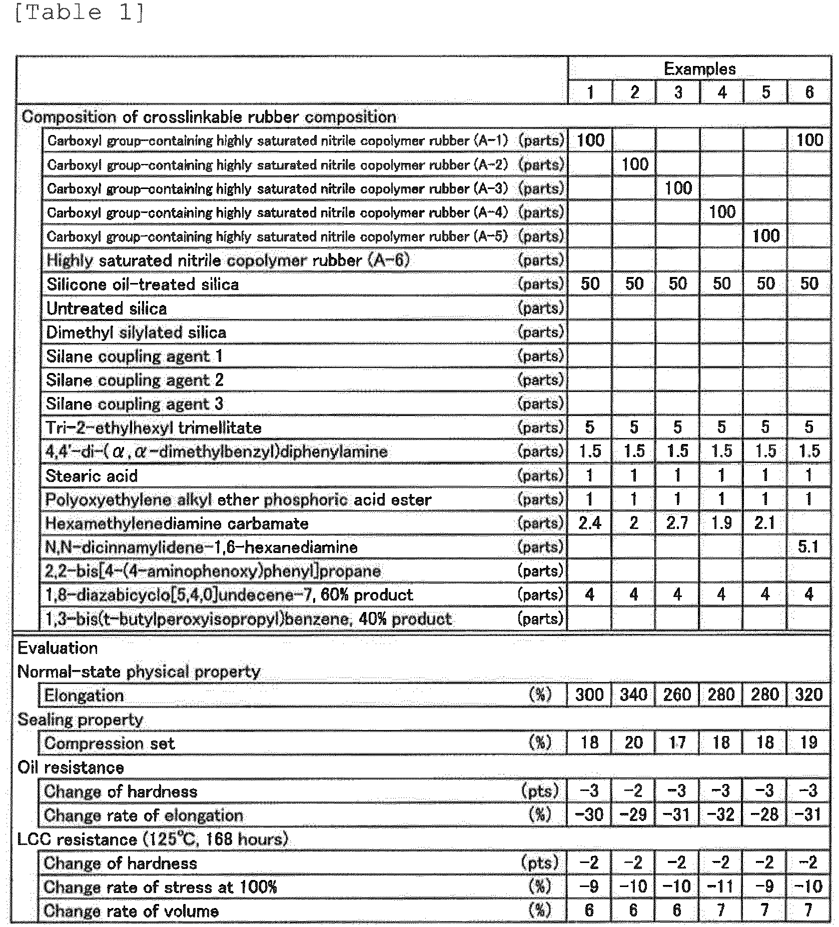

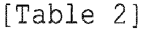

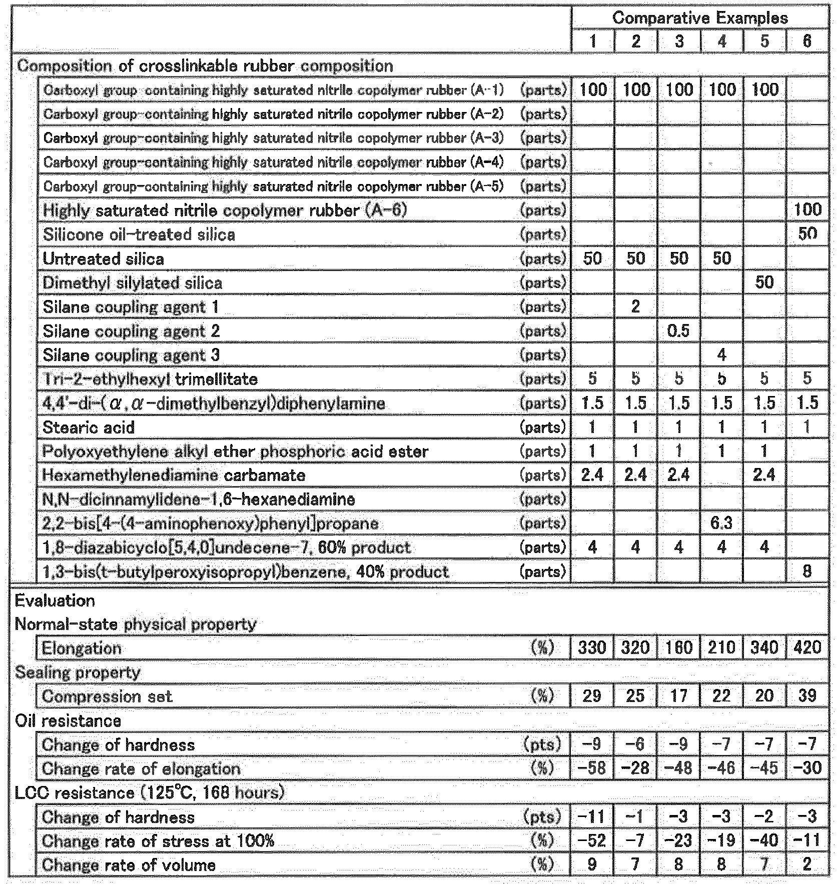

As shown in Tables 1 and 2, it could be confirmed that the crosslinked rubber products (Examples 1 to 6) obtained from a rubber composition including a carboxyl group-containing highly saturated nitrile copolymer rubber, a crosslinker, and silica treated with silicone oil exhibited excellent sealing property, oil resistance, and LLC resistance, compared with conventional rubber product (Comparative Examples 1 to 6). It was also found out that the crosslinked rubber products (Examples 1 to 6) maintained a good normal-state physical property (elongation).

In comparing Example 1 and Comparative Example 5, each containing the carboxyl group-containing highly saturated nitrile copolymer rubber and containing hydrophobic silica in the same amount, Example 1 in which silica treated with silicone oil was blended exhibited more excellent LLC resistance and oil resistance than Comparative Example 5 in which dimethyl silylated silica (silica treated with a silane compound having no siloxane bond) was blended.

In comparing Examples 1 to 6 and Comparative example 6, the silica treated with silicone oil of Examples 1-6 was blended in a carboxyl group-containing highly saturated nitrile copolymer rubber in the same amount as in Comparative example 6. However, all of LLC resistance, oil resistance, and sealing property were enhanced in Examples 1 to 6, compared with Comparative example 6 wherein a highly saturated nitrile copolymer rubber not containing carboxyl groups (A-6) was used. Based on such results, it was found that silica treated with silicone oil rendered a remarkable effect particularly when combining with carboxyl group-containing highly saturated nitrile copolymer rubber.

Although the embodiments of the present invention have been described above by way of examples, the present invention is not limited to specific embodiments or examples, and various modifications and alterations may be made within the scope of the invention described in the claims.

The present application is based on and claims the benefit of priority of Japanese Priority Application No. 2016-255727 filed on December 28, 2016, the entire contents of which are hereby incorporated by reference.

## Claims

1. A crosslinkable rubber composition comprising:
a carboxyl group-containing highly saturated nitrile copolymer rubber; and
silica treated with silicone oil.

2. The crosslinkable rubber composition according to claim 1, wherein the carboxyl group-containing highly saturated nitrile copolymer rubber includes:
5 to 60% by weight of α,β-ethylenically unsaturated nitrile monomer units (a1);
0.5 to 12% by weight of α,β-ethylenically unsaturated dicarboxylic acid monoester monomer units (a2); and
20 to 90% by weight of conjugated diene monomer units (a3), at least part of which being hydrogenated, and
wherein the carboxyl group-containing highly saturated nitrile copolymer rubber has an iodine value of 120 or less.

3. The crosslinkable rubber composition according to claim 1 or 2, wherein a content of the silica treated with silicone oil is 10 to 100 parts by weight with respect to 100 parts by weight of the carboxyl group-containing highly saturated nitrile copolymer rubber.

4. The crosslinkable rubber composition according to any one of claims 1 to 3, wherein the silicone oil is at least one selected from dimethyl polysiloxane, methyl hydrogen polysiloxane, and methyl phenyl polysiloxane.

5. A crosslinked rubber product prepared by crosslinking the rubber composition according to any one of claims 1 to 4.

6. The crosslinked rubber product according to claim 5, which is a sealing member.
